# FASCICULE DE BREVET EUROPEEN

(11) **EP 2 087 342 B1**
(45) Date de publication et mention de la délivrance du brevet: **29.02.2012**
(21) Numéro de dépôt: 07822099.3
(22) Date de dépôt: 31.10.2007
(51) Int. Cl.: G01N 21/55

(54) **STRUCTURE AMELIOREE DE DETECTION OPTIQUE POUR CAPTEUR PAR RESONANCE PLASMON.**
VERBESSERTE OPTISCHE NACHWEISSTRUKTUR FÜR EINEN PLASMONRESONANZSENSOR
IMPROVED OPTICAL DETECTION STRUCTURE FOR A PLASMON RESONANCE SENSOR.

(30) Priorité: 03.11.2006 FR 0654719
(43) Date de publication de la demande: 12.08.2009
(73) Titulaire: Commissariat à l'Énergie Atomique et aux Énergies Alternatives, 75015 Paris (FR)
(72) Inventeur: QUESNEL, Etienne, 38240 Meylan (FR); BARRITAULT, Pierre, 38100 Grenoble (FR); GRAND, Gilles, 38000 Grenoble (FR)
(74) Mandataire: Ilgart, Jean-Christophe
(86) Numéro de dépôt international: PCT/EP2007/061752
(87) Numéro de publication internationale: WO 2008/053016

(56) Documents cités:
- JP-A- 9 250 981
- JP-A- 10 267 930
- JP-A- 10 274 631
- JP-A- 2001 215 190
- US-A- 4 482 779
- US-B1- 6 408 123
- PATSKOVSKY S ET AL: "CHARACTERIZATION OF HIGH REFRACTIVE INDEX SEMICONDUCTOR FILMS BY SURFACE PLASMON RESONANCE" APPLIED OPTICS, OSA, OPTICAL SOCIETY OF AMERICA, WASHINGTON, DC, US, vol. 45, no. 25, 1 septembre 2006 (2006-09-01), pages 640-6645, XP001249820 ISSN: 0003-6935
- PATSKOVSKY S III ET AL: "On efficiency of surface-plasmon-resonance-based absorption sensing with different absorbent materials" PROCEEDINGS OF THE SPIE - THE INTERNATIONAL SOCIETY FOR OPTICAL ENGINEERING SPIE-INT. SOC. OPT. ENG USA, vol. 5327, no. 1, 2004, pages 102-105, XP002442727 ISSN: 0277-786X

## Description

### DOMAINE TECHNIQUE

L'invention concerne le domaine de la détection optique basée sur la résonance plasmon et prévoit un dispositif amélioré de détection optique par résonance plasmon ainsi qu'un procédé de mesure à l'aide d'un tel dispositif. La prévente invention peut s'appliquer notamment à des mesures optiques : d'échantillons biochimiques, d'atmosphère environnante, d'une concentration en gaz, de taux d'humidité, de propriétés de couches minces d'épaisseur par exemple de l'ordre d'un ou plusieurs nanomètres.

### ART ANTÉRIEUR

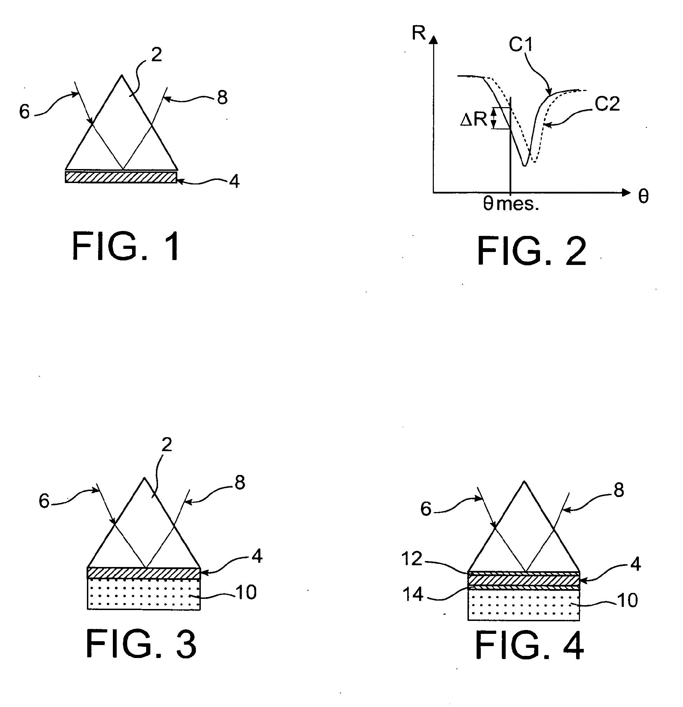

Le document « Surface plasmon resonance sensors : review », Homola et al., Sensors and actuators B, 54, 3-15, 1999 et le document US 5 991 488 présentent différentes variantes de dispositifs de détection optique par résonance plasmon. Un exemple de dispositif de détection par résonance plasmon est illustré sur la figure 1 et comprend notamment, un prisme 2 auquel une fine couche métallique 4 à base d'un métal adapté, par exemple un métal noble, est accolée. La fine couche métallique 4 est destinée à générer un plasmon de surface et sera appelée couche métallique « de plasmon ». Un rayonnement lumineux incident 6, qui peut être monochromatique et de longueur d'onde située dans le domaine du visible ou du proche infrarouge, est émis sur une face du prisme 2. Ce rayonnement lumineux est destiné à être dévié par le prisme 2 et à rencontrer la couche métallique 4 de plasmon. On mesure un rayonnement réfléchi 8 en sortie du prisme 2. La réponse optique d'un tel dispositif est illustrée sur la figure 2. Un pic de résonance sur la première courbe référencée C1 (en traits pleins) de la figure 2 traduit le fait, que pour un angle d'incidence donné, le signal incident est fortement absorbé par la couche métallique 4 de plasmon. L'absorption est plus ou moins importante suivant la polarisation, de type s ou de type p, du rayonnement lumineux incident, et la nature du métal de la couche de plasmon. Cela se traduit au niveau du signal détecté, par un pic de résonance plus ou moins fin. Lorsque l'on place un élément supplémentaire, par exemple une couche mince supplémentaire d'épaisseur de l'ordre d'un ou plusieurs nanomètres sur la couche métallique 4, un décalage de la courbe de réponse optique du détecteur se produit. Un exemple de réponse optique du détecteur doté de la couche mince supplémentaire est représenté par une deuxième courbe C2 sur la figure 2. Un autre exemple d'application d'un tel dispositif est la détection de matière biologique greffée sur la couche métallique 4. Le décalage dépend de la nature et des propriétés optiques des matériaux du prisme, de la couche métallique 4 et de la couche mince supplémentaire. En milieu liquide, la matière greffée peut induire une variation d'indice suffisante pour permettre de modifier la résonance plasmon. Le principe de la détection peut reposer sur une mesure d'un décalage en angle ou sur une mesure d'une variation d'intensité de signal réfléchi à un angle donné. Dans le cas d'une mesure d'un décalage en angle, plus ce décalage entre les deux courbes C1 et C2 est important, et plus le dispositif de détection est sensible. Dans le cas d'une mesure d'une variation d'intensité, on cherche à obtenir une dynamique de la courbe C2 la plus grande possible.

Des mesures optiques en transmission peuvent être également réalisées. Dans ce cas, selon une variante de mise en oeuvre du dispositif de détection précédemment décrit, le prisme peut être remplacé par un guide d'onde auquel on accole la couche métallique de plasmon.

Une solution en vue d'améliorer la sensibilité des dispositifs de détection par résonance plasmon a été proposée dans le document US 5 991 488 et consiste à placer une ou plusieurs couches diélectriques contre la couche métallique destinée à générer le plasmon. Une telle structure multicouches est difficile à réaliser, en particulier lorsque les métaux utilisés pour former la couche métallique sont des métaux nobles tels que de l'or ou de l'argent. Un exemple de dispositif de détection optique par résonance plasmon à structure multicouches est illustré sur la figure 3 et comporte une couche métallique 4 à base d'or ou d'argent, accolée au prisme 2 à base de verre ou de polymère, ainsi qu'une couche de matériau diélectrique 10 accolée à la couche métallique 4 destinée à générer le plasmon. Le matériau diélectrique de la couche 10 peut être par exemple un oxyde ou un fluorure, ou un séléniure, ou un sulfure, ou un nitrure. Dans la pratique, la stabilité d'une telle structure est insuffisante, dans la mesure où l'or ne se lie pas chimiquement à un oxyde de silicium ou à un polymère. Il est également difficile de lier une couche d'argent à un élément à base d'oxyde de silicium ou de polymère dans la mesure où, d'un point de vue thermodynamique, la stabilité des oxydes d'argent est insuffisante.

Pour obtenir une structure de détection stable, une solution illustrée sur la figure 4, consiste à mettre en oeuvre, entre la couche de métal plasmon à base d'or ou d'argent et la couche de matériau diélectrique 10, une première couche métallique 14 dite « d'accrochage ». Une autre couche métallique 12 « d'accrochage » peut être également prévue entre le prisme 2 et la couche métallique 4 de plasmon. Les couches métalliques 12 et 14 d'accrochage sont à base d'un métal qui, de préférence, n'est pas noble. Les couches « d'accrochage » 12 et 14, permettent de former un empilement stable. A l'interface avec la couche 4 de métal plasmon, la première couche d'accrochage métallique 14 forme un alliage métallique, tandis qu'à l'interface avec la couche de matériau diélectrique 10, des liaisons oxydes sont formées entre l'autre couche d'accrochage 12 et la couche diélectrique 10. Dans un cas, par exemple où la couche de matériau diélectrique 10 est à base de SiO₂, on obtient des liaisons Mp-O-Si (avec Mp le métal de la couche d'accrochage 12) qui permettent d'assurer une bonne adhérence. Les couches d'accrochage 12 et 14 sont typiquement à base de chrome, ou de titane ou de tantale, ou d'hafnium. L'épaisseur des couches métalliques d'accrochage est généralement d'au moins deux nanomètres pour qu'elles ne présentent pas de discontinuité. La réalisation des couches d'accrochage métalliques pose problème dans la mesure où, pour garantir une bonne adhérence avec la couche de métal plasmon, les métaux utilisés pour former les couches d'accrochage 12 et 14, doivent être d'une grande pureté. Or la plupart des métaux utilisés pour former les couches d'accrochage, par exemple tels que le Cr, le Ti, le Hf sont connus pour avoir tendance à piéger les atomes d'oxygène. Le dépôt de ces matériaux en couches fines et très pures nécessite donc des procédés de dépôt dont le vide résiduel doit être poussé. Par ailleurs, l'introduction des couches d'accrochage métalliques détériore les performances optiques du dispositif. En effet, aux longueurs d'onde de travail généralement utilisées, dans le visible ou le proche infrarouge, la plupart des métaux d'accrochage présentent des coefficients d'extinction k typiques compris entre 2 et 5. L'introduction des couches métalliques 12 et 14 d'accrochage a pour effet d'altérer la réponse optique en affaiblissant la dynamique du signal.

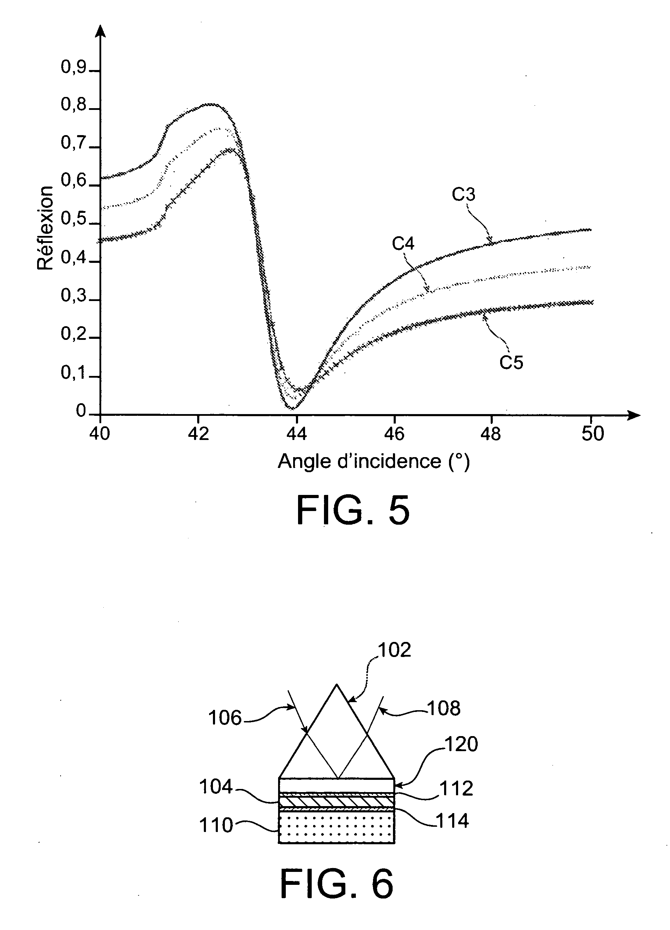

La figure 5 illustre le phénomène de la perte de sensibilité de détection due aux couches métalliques d'accrochage, par des résultats de mesures effectuées sur trois structures différentes dotées d'une même couche d'or destinée à générer le plasmon et de couches d'accrochages respectives de chrome entre le prisme et la couche d'or d'épaisseurs différentes d'une structure à l'autre. Sur cette figure 5, la courbe C3 est représentative de mesures effectuées à l'aide d'une première structure dotée de couches d'accrochage à base de chrome et d'épaisseur de 1 nanomètre, tandis que les courbes C4 et C5 sont représentatives respectivement, de mesures effectuées à l'aide d'une deuxième structure dotée de couches d'accrochage à base de chrome et d'épaisseur de 2 nanomètres, et de mesures effectuées à l'aide d'une troisième structure dotée de couches d'accrochage métalliques et d'épaisseur de 3 nanomètres. L'absorption optique de la couche d'accrochage de chrome induit un élargissement du pic de résonance plasmon d'autant plus important que son épaisseur est élevée. Cela se traduit sur la figure 5 par une diminution de la dynamique du signal d'autant plus élevée que l'épaisseur des couches d'accrochage de chrome est importante. Il se pose le problème de former un nouveau dispositif de détection optique par résonance plasmon qui ne présente pas les inconvénients mentionnés ci-dessus.

### EXPOSÉ DE L'INVENTION

L'invention concerne tout d'abord un dispositif de détection optique par résonance plasmon selon les revendications ci-jointes.

La couche de matériau diélectrique est une couche destinée à recevoir un ou plusieurs éléments que l'on souhaite détecter ou mesurer.

Une face de la couche diélectrique est ainsi dévoilée, le ou les éléments que l'on souhaite détecter, étant placé(s) sur cette face ou mis en contact avec cette face.

Le plasmon est une oscillation collective des électrons dans un matériau, lorsqu'ils sont excités par une forme d'énergie appropriée telle que la lumière, qui est à l'origine d'une onde électromagnétique.

La première couche semi-conductrice permet à la couche de matériau diélectrique d'adhérer à l'empilement sans détériorer les performances du détecteur.

La première couche semi-conductrice peut être à base de Si ou de Ge.

Selon une possibilité de mise en oeuvre, la première couche semi-conductrice peut avoir une épaisseur pas plus élevée que 2 nanomètres ou pas plus élevée que 1 nanomètre ou pas plus élevée que 0,5 nanomètres.

La couche métallique de plasmon peut être à base d'un métal noble.

Ledit empilement peut comprendre une deuxième couche semi-conductrice sur l'autre face de ladite couche métallique. La deuxième couche semi-conductrice peut jouer le rôle de couche d'accrochage et permettre à un élément à base de matériau diélectrique, par exemple un prisme ou un guide d'onde ou une couche ou une lame d'adhérer audit empilement. Ladite deuxième couche d'accrochage peut être à base de Si ou de Ge.

Selon une première possibilité de mise en oeuvre du dispositif optique de détection, ce dernier peut comprendre en outre : au moins un prisme accolé audit empilement.

Selon la première possibilité de mise en oeuvre, le dispositif peut comprendre en outre une lame accolée à ladite deuxième couche semi-conductrice, et placée entre la deuxième couche semi-conductrice et le prisme.

Selon une deuxième possibilité de mise en oeuvre, le dispositif de détection optique par résonance plasmon peut comprendre en outre : au moins un guide d'onde accolé audit empilement.

Selon la deuxième possibilité de mise en oeuvre, le dispositif de détection peut comprendre en outre au moins une deuxième couche de matériau diélectrique en contact avec ledit guide d'onde et avec la deuxième couche semi-conductrice.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- la figure 1 illustre un dispositif optique de détection par résonance plasmon suivant l'art antérieur, doté d'une couche métallique destinée à générer ledit plasmon et placée contre un prisme,
- la figure 2 illustre des exemples de réponses optiques obtenues à l'aide d'un dispositif du type de celui de la figure 1,
- la figure 3 illustre une variante de mise en oeuvre du dispositif de la figure 1, dans laquelle une couche de matériau diélectrique destinée à améliorer la sensibilité du dispositif est accolée à la couche métallique de plasmon,
- la figure 4 illustre une variante du dispositif de la figure 3, dans laquelle la couche métallique est une couche de métal noble, et qui comporte des couches d'accrochage métalliques, entre le prisme et la couche de métal noble, et entre cette dernière et la couche diélectrique,
- la figure 5 illustre des réponses optiques de dispositifs du type de celui de la figure 4 et ayant des couches d'accrochage métalliques respectives d'épaisseur différentes,
- la figure 6 illustre un exemple de dispositif optique de détection par résonance plasmon suivant l'invention,
- la figure 7 illustre des courbes d'évolution des coefficients d'extinction de couches à base de silicium et de Germanium en fonction d'une longueur d'onde d'un rayonnement incident situé dans le visible et le proche infrarouge,
- la figure 8 illustre les réponses optiques d'un dispositif de détection optique suivant l'art antérieur et d'un exemple de dispositif de détection optique suivant l'invention,
- la figure 9 illustre différentes réponses optiques d'exemples de dispositifs de détection optiques suivant l'invention, dotés respectivement d'une couche semi-conductrice accolée à la couche métallique de plasmon,
- la figure 10 illustre une variante de dispositif de détection optique par résonance plasmon suivant l'invention, dans lequel l'empilement comportant la couche métallique destinée à générer le plasmon est accolé à un guide d'onde,
- les figures 11A et 11B illustrent des exemples de courbes de réponse optique d'un dispositif du type de celui de la figure 10.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Un exemple de dispositif de détection optique par résonance plasmon suivant l'invention, va à présent être donné en liaison avec la figure 6.

Ce dispositif comprend un prisme 102 qui peut être par exemple à base d'un verre ou d'un polymère. Contre une face du prisme 102, est disposé un empilement comportant au moins une couche métallique 104 dite « de plasmon », destinée à générer un plasmon de surface. La couche métallique 104 de plasmon peut être à base d'un métal noble, par exemple tel que de l'argent ou de l'or et peut avoir une épaisseur comprise par exemple entre 10 et 100 nanomètres, par exemple de l'ordre de 40 nanomètres. Un rayonnement lumineux incident 106, qui peut être monochromatique, est destiné à être émis sur une face du prisme 102. Le rayonnement lumineux incident est destiné à être dévié par le prisme 102 et à rencontrer la couche métallique 104 « de plasmon ». On mesure un rayonnement réfléchi 108 en sortie du prisme 102.

L'empilement comprend également une couche 110 de matériau diélectrique, par exemple à base de SiO₂, qui peut avoir une épaisseur comprise par exemple entre 10 et 100 nanomètres, par exemple de l'ordre de 400 nanomètres. La couche métallique 104 de plasmon est située entre le prisme 102 et la couche diélectrique 110. Une face de la couche diélectrique est destinée à recevoir ou à être en contact avec un ou plusieurs éléments que l'on souhaite détecter, par exemple des substances biologiques ou un gaz.

Une première couche semi-conductrice 114 dite « intermédiaire » est située entre la couche métallique 104 de plasmon et la couche diélectrique 104. La première couche semi-conductrice 114 est prévue pour permettre à la couche diélectrique 110 d'adhérer à l'empilement, tout en évitant d'altérer la réponse optique du détecteur. La première couche semi-conductrice 114 est en contact avec la couche 104 de plasmon et la couche diélectrique 110 et peut être par exemple à base de Si ou de Ge. La première couche semi-conductrice 114 peut avoir une épaisseur comprise par exemple entre 0,4 et 3 nanomètres.

Une deuxième couche semi-conductrice 112 intermédaire peut être également prévue sur la couche métallique 104. La deuxième couche semi-conductrice 112 est en contact avec la couche 104 métallique et avec le prisme 102 et peut être par exemple à base de Si ou de Ge. La deuxième couche semi-conductrice 112 peut avoir une épaisseur comprise par exemple entre 0,3 et 3 nanomètres, par exemple de l'ordre de 2,7 nanomètres. Les couches semi-conductrices 114 et 112 sont de préférence continues, c'est à dire uniformément recouvrantes. Cette continuité des couches 114, 112 garantie une adhérence homogène avec la couche métallique 104 de plasmon et avec la couche avec laquelle la deuxième couche semi-conductrice 112 est accolée. La réalisation des couches 114 et 112 ne nécessite pas la mise en oeuvre d'un vide poussé.

Les couches semi-conductrices, notamment des couches à base de silicium ou de germanium, peuvent être déposées selon des procédés de dépôt sous vide connus. On peut entre autre utiliser des techniques de dépôts « physiques », par évaporation ou pulvérisation, ou des techniques de dépôts « chimiques ». Le vide utilisé est par exemple compris entre 10⁻⁵ et 10⁻⁸ mbar.

Selon une possibilité de mise en oeuvre, une lame 120 de microscope, par exemple à base de verre, peut être située entre la deuxième couche semi-conductrice 112 et le prisme 102. La lame 120 peut être en contact avec la deuxième couche semi-conductrice 112, tandis qu'un liquide d'indice peut être prévu entre le prisme 102 et la lame 120. Le prisme 102, la lame 120, et le liquide d'indice peuvent avoir des indices de réfraction identiques, par exemple de l'ordre de 1,515 pour une longueur d'onde de 633 nm. L'empilement peut être prévu par exemple pour une détection à une longueur d'onde de l'ordre de 633 nm et un angle d'incidence de l'ordre de 50° ou 65°.

Le matériau des couches semi-conductrices 114 et 112 intermédiaires tel que le silicium ou le Germanium, a une capacité à s'allier au métal de la couche 102 tel que l'or ou l'argent ainsi que des propriétés optiques permettant d'obtenir un détecteur optique de sensibilité améliorée. Le matériau des couches semi-conductrices 114 et 112 présente en particulier un coefficient d'extinction faible, par exemple compris entre 0,7 et 0,4 lorsque ce matériau est du silicium et que le rayonnement incident 106 est situé dans un domaine de longueurs d'onde visible allant de 550 nm à 650 nm.

Tout au long de la présente description on appellera coefficient d'extinction, le coefficient k lié au coefficient d'absorption lumineuse α caractéristique d'une substance ou d'une couche soumise à un rayonnement lumineux, par la formule suivante α = 4πk/λ, où λ est la longueur d'onde du rayonnement lumineux.

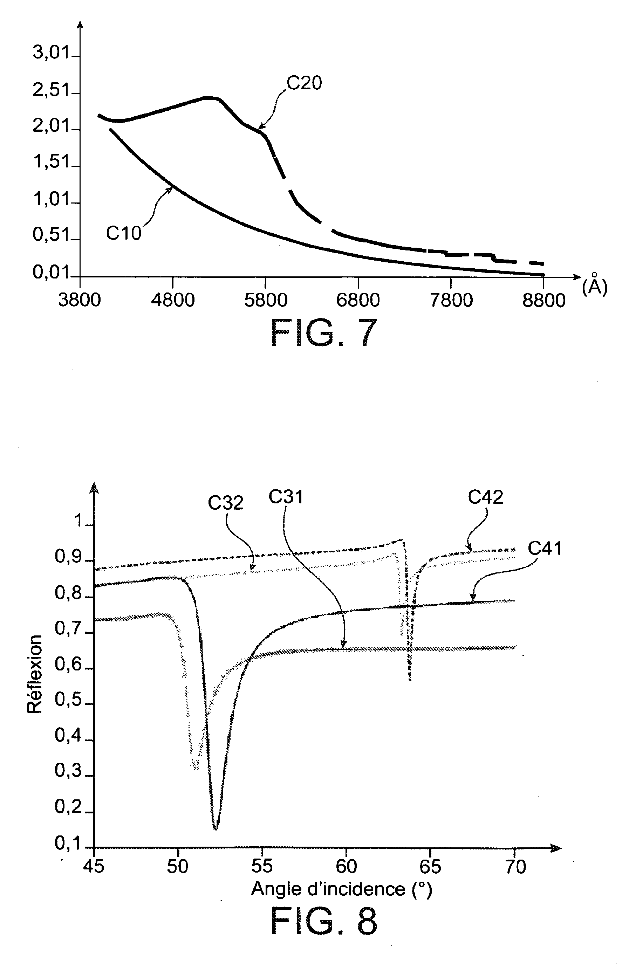

Sur la figure 7, des courbes d'évolution typiques des coefficients d'extinction du silicium (courbe représentative C10) et du Germanium (courbe représentative C20) en fonction d'un domaine de longueur d'onde d'un rayonnement incident situé dans le visible et le proche infrarouge, sont représentées. Dans le cas où le dispositif de détection optique fonctionne avec un rayonnement lumineux incident de longueur d'onde proche de l'infrarouge ou supérieure à 700 nm, les couches semi-conductrices 114 et 112 peuvent être formées à base de Si ou de Ge. Dans un autre cas, où le dispositif de détection est prévu pour fonctionner avec un rayonnement lumineux incident ayant une longueur d'onde inférieure à 700 nm, les couches d'accrochage 114 et 112 sont de préférence formées à base de silicium.

La figure 8 illustre les différences de performances de détection, entre un dispositif de détection optique à résonance plasmon suivant l'art antérieur, et un dispositif de détection optique à résonance plasmon mis en oeuvre suivant la présente invention. Sur cette figure 8, les courbes C31 et C32 sont représentatives de réponses optiques obtenues à l'aide d'un dispositif de détection mis en oeuvre suivant l'art antérieur, et du type de celui décrit précédemment en liaison avec la figure 4, et pour lequel la couche métallique 4 de plasmon est en argent et d'épaisseur de l'ordre de 41,5 nanomètres, tandis que les couches d'accrochage 12 et 14 sont des couches de chrome et d'épaisseurs respectives de l'ordre de 2,47 nanomètres et 1,42 nanomètres, et que la couche diélectrique 10 est une couche de SiO₂ de l'ordre de 400,6 nanomètres d'épaisseur. La courbe C31 est représentative de mesures obtenues à l'aide d'un rayonnement incident 6 en polarisation s tandis que la courbe C32 est obtenue à l'aide d'un rayonnement incident 6 en polarisation p. Sur cette figure 8, des courbes C41 et C42 sont quant à elles représentatives de réponses optiques obtenues à l'aide d'un dispositif de détection suivant l'invention du type de celui décrit précédemment en liaison avec la figure 6, et dans lequel la couche métallique 104 de plasmon est une couche d'argent d'épaisseur de l'ordre de 42,8 nanomètres, les couches d'interface 102 et 104 sont des couches de silicium et d'épaisseurs respectives de l'ordre de 2,75 nanomètres et 1,26 nanomètres, et la couche diélectrique 110 est une couche de SiO₂ d'épaisseur de l'ordre de 406,8 nanomètres. La courbe C41 est représentative d'une mesure obtenue avec un rayonnement incident 106 polarisé selon une polarisation s tandis que la courbe C42 obtenue à l'aide d'un rayonnement incident 106 polarisé selon une polarisation p. La figure 8 montre que la réponse optique du dispositif suivant l'invention présente une meilleure dynamique que celle du dispositif de détection suivant l'art antérieur. Le détecteur présente également une sensibilité meilleure en polarisation s qu'en polarisation p.

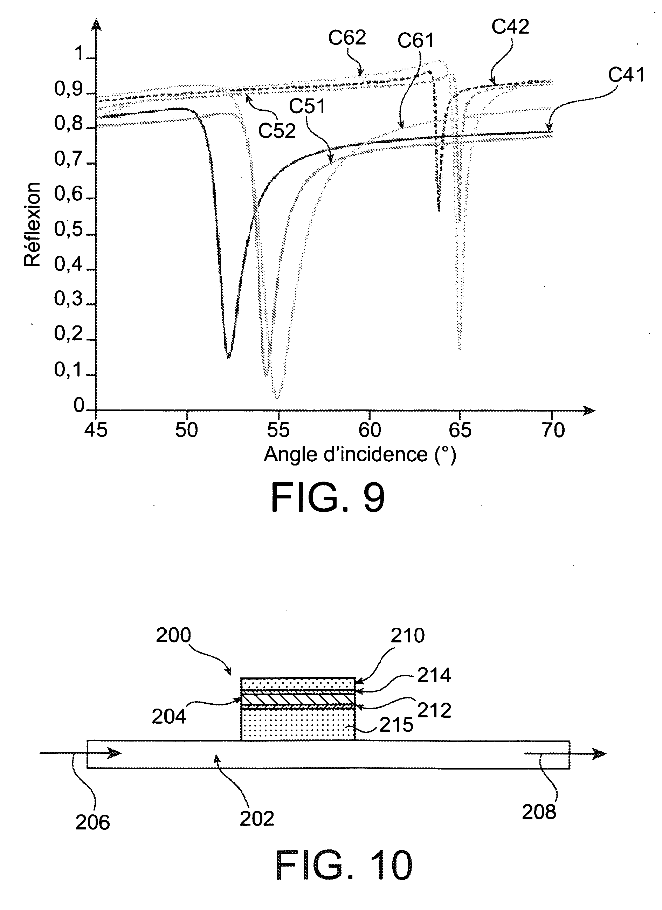

Sur la figure 9, les courbes C41 et C42 ainsi que d'autres courbes C51, C52, C61, C62 de réponses optiques sont données. Sur cette figure 9, les courbes C51 et C52 sont représentatives de réponses optiques obtenues à l'aide d'un dispositif de détection suivant l'invention du type de celui décrit précédemment en liaison avec la figure 6, et dans lequel la couche métallique 104 de plasmon est une couche d'argent d'épaisseur de l'ordre de 43,2 nanomètres, les couches d'interface 102 et 104 sont des couches de silicium d'épaisseurs respectives de l'ordre de 2,75 nanomètres et 0,85 nanomètres, et la couche diélectrique 110 est une couche de SiO₂ d'épaisseur de l'ordre de 434,5 nanomètres. Les courbes C61 et C62 sont représentatives de réponses optiques obtenues à l'aide d'un dispositif de détection suivant l'invention du type de celui décrit précédemment en liaison avec la figure 6, et dans lequel la couche métallique 104 de plasmon est une couche d'argent d'épaisseur de l'ordre de 36,5 nanomètres, les couches d'interface 102 et 104 sont des couches de silicium et d'épaisseurs respectives de l'ordre de 2,71 nanomètres et 0,46 nanomètres, et la couche diélectrique 110 est une couche de SiO₂ d'épaisseur de l'ordre de 401,2 nanomètres. Les courbes C51 et C61 sont représentatives de mesures obtenues avec un rayonnement incident 106 polarisé selon une polarisation s tandis que les courbes C52 et C62 sont représentatives de mesures obtenues à l'aide d'un rayonnement incident 106 polarisé selon une polarisation p. Les courbes de la figure 9 montrent que les performances du détecteur sont d'autant meilleures, en terme de dynamique du signal mesuré, que l'épaisseur de la couche semi-conductrice 114 entre la couche métallique 104 de plasmon et la couche diélectrique 110 est faible.

Un autre exemple de dispositif de détection optique à résonance plasmon est illustré sur la figure 10. Dans cet exemple, le dispositif est prévu pour une mesure en « transmission » et comprend un guide d'onde 202 qui peut être par exemple à base de verre ou d'un polymère. Sur le guide d'onde 202 est disposé un empilement comportant une couche métallique 204, destinée à générer le plasmon, et à base d'un métal noble, par exemple tel que de l'argent ou de l'or et ayant une épaisseur comprise par exemple entre 10 et 100 nanomètres, par exemple de l'ordre de 40 nanomètres. L'empilement comprend également une première couche 210 de matériau diélectrique, par exemple à base de SiO₂ et qui peut avoir une épaisseur comprise par exemple entre 10 et 100 nanomètres, par exemple de l'ordre de 40 nanomètres. Une première couche semi-conductrice 214 est prévue entre la couche métallique 204 de plasmon et la première couche diélectrique 210. La première couche semi-conductrice intermédiaire 214 est prévue pour permettre à la première couche diélectrique 210 d'adhérer à l'empilement tout en évitant une altération de la réponse optique du détecteur. La première couche semi-conductrice 214 peut être par exemple à base de Si ou du Ge. La première couche semi-conductrice 114 peut avoir une épaisseur comprise entre 0,4 et 3 nanomètres, par exemple de l'ordre de 2 nanomètres. Une deuxième couche semi-conductrice 112 peut être également prévue sur la couche métallique 104. La deuxième couche semi-conductrice 112 peut avoir une épaisseur comprise entre 0,4 et 3 nanomètres, par exemple de l'ordre de 1 nanomètre. La deuxième couche semi-conductrice 114 est en contact avec la couche 104 métallique et une deuxième couche de matériau diélectrique 215 en contact avec le guide d'onde 202. La deuxième couche 215 de matériau diélectrique est également prévue pour permettre à la première couche diélectrique 210 d'adhérer à l'empilement tout en évitant une altération de la réponse optique du détecteur. La deuxième couche 215 de matériau diélectrique peut être par exemple à base de SiO₂ et peut avoir une épaisseur comprise par exemple entre 10 et 1000 nanomètres, par exemple de l'ordre de 800 nanomètres.

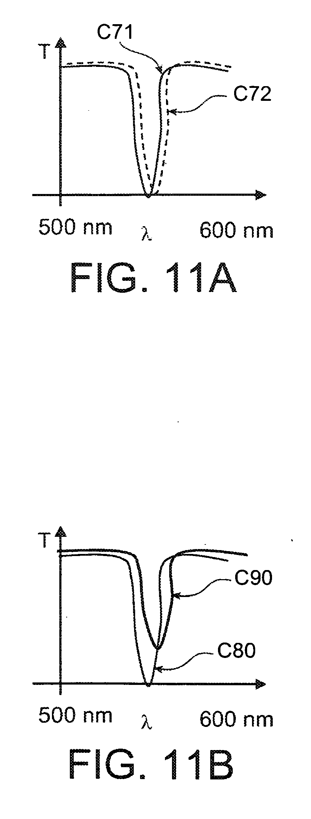

La mesure est cette fois une mesure d'un signal lumineux transmis 208 en sortie du guide d'onde 202, en fonction de la longueur d'onde de rayons lumineux 206 injectés dans le guide d'onde 202. Pour ce type de détection, le phénomène de résonance plasmon induit une chute de transmission du signal dont le positionnement en longueur d'onde résulte de la nature et de la structure de l'empilement formé par la deuxième couche de matériau diélectrique 215, la première couche semi-conductrice 214, la couche métallique 204 générant le plasmon, la première couche semi-conductrice 214, et la première couche de matériau diélectrique 210. Une modification de l'indice de surface sur la couche diélectrique 210 au sommet de la structure induit un décalage du spectre en transmission. Ce décalage est illustré sur la figure 11A par les courbes C71 et C72 de signal transmis représentatives respectivement, de mesures effectuées sans la présence d'élément supplémentaire sur la couche diélectrique 210, et de mesures effectuées avec un élément supplémentaire modifiant l'indice de surface.

Sur la figure 11B, une courbe C80 représentative d'un signal transmis 208 obtenu avec un dispositif tel que précédemment décrit en liaison avec la figure 10 et dans lequel les couches d'interface 212 et 214 sont à base de silicium, et une autre courbe représentative C90 d'un signal transmis obtenu avec un dispositif semblable, mais dans lequel les couches 214 et 212 sont remplacées par des couches à base de Chrome. Comme cela est montré sur cette figure 11B, les performances de détection en termes d'amplitude de signal transmis sont supérieures avec un dispositif doté des couches d'interface 212 et 214 semi-conductrices.

On notera que la deuxième couche diélectrique 215 permet d'adapter optiquement l'empilement et le guide d'onde, de façon que les rayons lumineux 206 entrent le plus possible dans l'empilement pour créer un champ électromagnétique maximal dans la couche plasmon 204. La deuxième couche diélectrique 215 permet de réaliser une adaptation d'impédance entre l'empilement et le guide d'ondes.

L'un ou l'autre des dispositifs précédemment décrits peuvent être intégrés par exemple dans un capteur de mesure : d'échantillons biochimiques, ou d'atmosphère environnante, ou de mesure d'une concentration en gaz, ou de mesure de taux d'humidité.

Un dispositif selon la présente invention inclut une couche métallique dite de plasmon. Cette couche métallique peut éventuellement être constituée d'un empilement de plusieurs couches métalliques de différentes compositions. De même, les couches diélectriques utilisées peuvent chacune être constituées d'un empilement de plusieurs couches diélectriques de différentes natures. Il en va de même pour la ou les couches semi-conductrices d'accrochage.

## Revendications

1. Dispositif de détection optique par résonance plasmon incluant un empilement comprenant :
- une couche métallique (104,204) dite « de plasmon », destinée à générer ledit plasmon,
- une couche de matériau diélectrique (110, 210) dont une face donnée est dévoilée et est destinée à recevoir un ou plusieurs éléments que l'on souhaite détecter, le dispositif étant **caractérisé en ce qu'**il comprend en outre :
- une couche semi-conductrice (114, 214) d'accrochage placée entre ladite couche métallique et ladite couche diélectrique, ladite couche semi-conductrice recouvrant une face de la couche métallique et étant en contact avec ladite couche métallique et avec une autre de face de ladite couche de matériau diélectrique opposée à ladite face donnée.

2. Dispositif de détection optique par résonance plasmon selon la revendication 1, ledit empilement comprenant en outre une deuxième couche semi-conductrice (112, 212) sur l'autre face de ladite couche métallique de plasmon.

3. Dispositif de détection optique par résonance plasmon selon l'une des revendications 1 ou 2, la première couche semi-conductrice (114, 214) ayant une épaisseur inférieure à 2 nanomètres.

4. Dispositif de détection optique par résonance plasmon selon l'une des revendications 2 ou 3, ladite première couche semi-conductrice ou/et ladite deuxième couche semi-conductrice étant à base de silicium ou de germanium.

5. Dispositif de détection optique par résonance plasmon selon l'une des revendications 1 à 4, comprenant en outre : au moins un prisme (102) accolé audit empilement.

6. Dispositif de détection optique par résonance plasmon selon la revendication 5, dans lequel ledit empilement comprend au moins une deuxième couche semi-conductrice (112, 212) sur l'autre face de ladite couche métallique, le dispositif de détection comprenant en outre une lame accolée à ladite deuxième couche semi-conductrice (112,212) et placée entre cette dernière et le prisme.

7. Dispositif de détection optique par résonance plasmon selon l'une des revendications 1 à 4, comprenant en outre : au moins un guide d'onde (202) accolé audit empilement.

8. Dispositif de détection optique par résonance plasmon selon la revendication 7, dans lequel au moins une deuxième couche semi-conductrice (112, 212) recouvre l'autre face de ladite couche métallique, le dispositif comprenant au moins une deuxième couche de matériau diélectrique en contact avec ledit guide d'onde (202) et avec ladite deuxième couche semi-conductrice (212).

## Claims

1. Plasmon resonance optical detection device including a stack comprising:
- a plasmon layer, that will generate said plasmon,
- a layer of dielectric material (110, 210) having a given face that is revealed and that is adapted to receive one or several elements to be detected, the device being **characterized in that** it further comprises:
- a semiconductor bond layer (114, 214) placed between said metal layer and said dielectric layer, said semiconductor layer covering one face of the metal layer and being in contact with said metal layer and with another face of dielectric material layer opposite said given face.

2. Plasmon resonance optical detection device according to claim 1, said stack comprising also a second semiconductor layer (112, 212) on the other face of said plasmon metal layer.

3. Plasmon resonance optical detection device according to one of claims 1 or 2, the first semiconductor layer (114, 214) having a thickness less than 2 nanometres.

4. Plasmon resonance optical detection device according to one of claims 2 or 3, said first semi-conducting layer and/or said second semi-conducting layer being based on silicon or germanium.

5. Plasmon resonance optical detection device according to one of claims 1 to 4, also comprising at least one prism (102) bonded to said stack.

6. Plasmon resonance optical detection device according to claim 5, in which said stack comprises at least one second semi-conducting layer (112, 212) on the other face of said metal layer, the detection device also comprising a slide bonded to said second semi-conducting layer (112, 212) and placed between this second semi-conducting layer and the prism.

7. Plasmon resonance optical detection device according to one of claims 1 to 4, also comprising at least one waveguide (202) bonded to said stack.

8. Plasmon resonance detection device according to claim 7, in which at least a second semi-conducting layer covers the other face of said metal layer, the device comprising at least one second layer of dielectric material in contact with said waveguide and with said second semi-conducting layer.

## Patentansprüche

1. Vorrichtung zur optischen Detektion durch Plasmonenresonanz, umfassend einen Stapel, welcher umfasst:
- eine als "Plasmonenschicht" bezeichnete metallische Schicht (104, 204), die dazu bestimmt ist, das Plasmon zu erzeugen,
- eine Schicht aus einem dielektrischen Material (110, 210), deren eine gegebene Fläche frei liegt und dazu bestimmt ist, ein oder mehrere Elemente aufzunehmen, welche detektiert werden sollen, wobei die Vorrichtung dadurch charakterisiert ist, dass sie weiterhin umfasst:
- eine halbleitende Verankerungsschicht (114, 214), die zwischen der metallischen Schicht und der dielektrischen Schicht angeordnet ist, wobei die halbleitende Schicht eine Fläche der metallischen Schicht abdeckt und mit der metallischen Schicht und mit einer anderen Fläche der Schicht aus dielektrischem Material in Kontakt steht, welche der gegebenen Fläche gegenüberliegt.

2. Vorrichtung zur optischen Detektion durch Plasmonenresonanz nach Anspruch 1, wobei der Stapel weiter eine zweite halbleitende Schicht (112, 212) auf der anderen Fläche der metallischen Plasmonenschicht umfasst.

3. Vorrichtung zur optischen Detektion durch Plasmonenresonanz nach einem der Ansprüche 1 oder 2, wobei die erste halbleitende Schicht (114, 214) eine Dicke von kleiner als 2 nm aufweiset.

4. Vorrichtung zur optischen Detektion durch Plasmonenresonanz nach einem der Ansprüche 2 oder 3, wobei die erste halbleitende Schicht oder/und die zweite halbleitende Schicht auf Silizium oder Germanium basieren.

5. Vorrichtung zur optischen Detektion durch Plasmonenresonanz nach einem der Ansprüche 1 bis 4, weiterhin umfassend wenigstens ein Prisma (102), welches auf den Stapel aufgebracht ist.

6. Vorrichtung zur optischen Detektion durch Plasmonenresonanz nach Anspruch 5, wobei der Stapel wenigstens eine zweite halbleitende Schicht (112, 212) auf der anderen Fläche von der metallischen Schicht umfasst, wobei die Vorrichtung zur Detektion weiterhin ein Plättchen umfasst, das auf die zweite halbleitende Schicht (112, 212) aufgebracht und zwischen dieser und dem Prisma positioniert ist.

7. Vorrichtung zur optischen Detektion durch Plasmonenresonanz nach einem der Ansprüche 1 bis 4, weiterhin umfassend wenigstens einen Wellenleiter (202), der auf den Stapel aufgebracht ist.

8. Vorrichtung zur optischen Detektion durch Plasmonenresonanz nach Anspruch 7, wobei wenigstens eine zweite halbleitende Schicht (112, 212) die andere Fläche der metallischen Schicht abdeckt, wobei die Vorrichtung wenigstens eine zweite Schicht aus dielektrischem Material in Kontakt mit dem Wellenleiter (202) und mit der zweiten halbleitenden Schicht (212) umfasst.
